Europäisches Patentamt

European Patent Office

Office européen des brevets

(19)

(11) Veröffentlichungsnummer: **0 021 066**
A1

(12) # EUROPÄISCHE PATENTANMELDUNG

(21) Anmeldenummer: **80102917.4**

(22) Anmeldetag: **24.05.80**

(51) Int. Cl.³: **C 03 B 7/00, C 03 B 11/16, G 01 G 17/04, G 01 F 17/00**

(30) Priorität: **12.06.79 DE 2923705**

(43) Veröffentlichungstag der Anmeldung: **07.01.81**
Patentblatt 81/1

(84) Benannte Vertragsstaaten: **AT BE CH FR IT LI LU NL SE**

(71) Anmelder: **VEBA-GLAS Aktiengesellschaft,
Ruhrglasstrasse 50, D-4300 Essen 12 (DE)**

(72) Erfinder: **Knoth, Werner-Dieter, Byfanger Strasse 175,
D-4300 Essen-Kupferdreh (DE)**

(74) Vertreter: **Spalthoff, Adolf, Dipl.-Ing.,
Pelmanstrasse 31 P.O. Box 34 02 20,
D-4300 Essen 1 (DE)**

(54) **Verfahren und Vorrichtung zur Ermittlung des Gewichtes von Hohlglasartikeln während deren Herstellung im Pressblasverfahren mittels IS-Maschinen.**

(57) Die Aufgabe besteht darin, in einfacher Weise eine Ermittlung des Gewichtes von Hohlglasartikeln bereits während ihrer Herstellung zu ermöglichen, so daß frühzeitig in den Herstellungsprozeß eingegriffen werden kann, mit der Folge einer Reduzierung oder Erhöhung des Gewichtes der herzustellenden Glasartikel. Erfindungsgemäß wird dies dadurch erreicht, daß nach Einbringen des flüssigen Glastropfens in die Vorform eines IS-Maschine die Messung seines Volumens erfolgt. Die Volumenmessung wird durch Bestimmung der Eindringtiefe des Preßstempels in den in der Vorform befindlichen Glastropfen vorgenommen. Die Messung der Eindringtiefe des Preßstempels erfolgt durch Erfassung des vom Preßstempel beim Preßvorgang zurückgelegten Weges. Die erfaßten Werte dienen zur Regelung der Größe der den Vorformen zugeführten Glastropfen.

- I -

"Verfahren und Vorrichtung zur Ermittlung des Gewichtes von Hohlglasartikeln während deren Herstellung im Preßblasverfahren mittels IS-Maschinen"

Die Erfindung betrifft ein Verfahren sowie eine Vorrichtung zur Ermittlung des Gewichtes von Hohlglasartikeln während deren Herstellung im Preßblasverfahren mittels IS-Maschinen.

Die Herstellung von Hohlglasartikeln erfolgt in der Weise, daß die Rohstoffe in einem Wannenofen erschmolzen und homogenisiert werden. Über Rinnen und/oder Röhren einer Überleitungsvorrichtung wird das flüssige Glas dem Verarbeitungsort zugeleitet. Dort wird der kontinuierliche Glasstrang zur Herstellung einzelner Artikel mittels einer Schere od.dgl. in Stücke zerschnitten. Die so gebildeten Glasstücke fallen dann als flüssige Glastropfen in Rinnen und/ oder Röhren der Überleitungseinrichtung, welche jeden Tropfen an den ihm zugehörigen Platz einer Verarbeitungsmaschine leiten. Wegen des großen Verformungsgrades eines Glastropfens erfolgt die Herstellung von Hohlglasartikeln im allgemeinen in zwei Stufen. Beim sog. Preßblasverfahren wird in der ersten Stufe in den flüssigen Glastropfen, der sich in der sog. Vor-

0021066

- 2 -

form befindet, ein Preßstempel, der sog. Pegel, eingedrückt, daraufhin wird der vorgeformte Glastropfen in die Fertigform übergesetzt, in welcher dann durch Einblasen von Druckluft in den vom Preßstempel gebildeten Hohlraum die endgültige Ausformung geschieht.

Um ein Über- oder Untergewicht der hergestellten Glasartikel zu vermeiden ist es bekannt, deren Gewicht durch gravimetrische Bestimmung zu ermitteln. Zu diesem Zwecke wird das unbekannte Gewicht des erzeugten Artikels mit einem bekannten Gewicht verglichen. Weiterhin ist es zu diesem Zwecke bekannt, die Änderung eines elektrischen Widerstandes zu erfassen, um ein solch unbekanntes Artikelgewicht zu ermitteln. Beide Verfahren weisen aber den Nachteil auf, daß sie vom fertigen Artikel ausgehen und dessen Gewicht bestimmen. Dies hat aber zur Folge, daß zwischenzeitlich durch die laufende Fertigung eine große Anzahl von Glasartikeln hergestellt worden sind, die Über- oder Untergewicht besitzen.

Um diese Schwierigkeiten zu vermeiden, ist es bekannt, aus dem kontinuierlich zugeführten flüssigen Glasstrang abgeschnittene Tropfen als Vorlage zu verwenden und deren Gewicht auf optischem Wege über die abgebildete Tropfengröße zu ermitteln. Dieses bekannte Verfahren ist jedoch ebenso, wie die beiden vorerwähnten, mit erheblichen Ungenauigkeiten behaftet.

Von diesem Stand der Technik ausgehend liegt der Erfindung die Aufgabe zugrunde, ein Verfahren und eine Vorrichtung der eingangs genannten Art zu schaffen, welche in einfacher Weise eine Ermittlung des Gewichtes von Hohlglasartikeln bereits während ihrer Herstellung ermöglichen, so daß frühzeitig in den Herstellungsprozeß eingegriffen werden kann, mit der Folge einer Reduzierung oder Erhöhung des Gewichtes der herzustellenden Glasartikel.

Gemäß der Erfindung wird dies dadurch erreicht, daß nach Einbringen des flüssigen Glastropfens in die Vorform einer IS-Maschine die Messung seines Volumens erfolgt. Der Leitgedanke der Erfindung besteht somit darin, die Feststellung des Artikelgewichts über eine Volumenbestimmung des abgeschnittenen Glastropfens während seiner Verarbeitung durchzuführen. Aus dem Volumen dieses Glastropfens und dem konstanten, spezifischen Gewicht von Glas kann unmittelbar auf das Gesamtgewicht geschlossen werden.

Vorteilhaft wird die Volumenmessung durch Bestimmung der Eindringtiefe des Preßstempels in dem in der Vorform befindlichen Glastropfen vorgenommen, und zwar durch Erfassung des vom Preßstempel beim Preßvorgang zurückgelegten Weges. Zu diesem Zweck wird der Endbereich des Weges des Betätigungskolbens des Preßstempels oder der Kolbenstange des Betätigungskolbens gemessen.

Der zurückgelegte Weg wird mittels eines Meßwertgebers erfaßt und sichtbar gemacht, beispielsweise auf Schreibstreifen, Digitalanzeigen, Meßgeräten, Bildschirmröhren usw. Weiterhin besteht die Möglichkeit, die vom Meßwertgeber erfaßten Werte zur Regelung der Größe der den Vorformen zugeführten Glastropfen zu verwenden, was beispielsweise durch Verstellen der Schere beim Abschneiden der Glastropfen durchgeführt werden kann. Auf diese Weise ist eine automatische Regelung möglich, so daß bei Abweichungen vom vorgegebenen Sollgewicht ein sofortiger Ausgleich möglich ist.

Die Eindringtiefe des Preßstempels in die Vorform geht gerade so weit, daß das Glas die Form voll ausfüllt. Bei diesem Zustand hat die Menge des Glases gerade den theoretisch berechneten Wert erreicht. Befindet sich zuviel Glas in der Vorform, d.h. also zu hohes Gewicht, wird der Preßstempel eine geringe Eindringtiefe erreichen können, bis das Glas das Volumen der Form ausfüllt. Ist dagegen zu wenig Glas in die Vorform gelangt, d.h. ein zu geringes Gewicht, so kann der Preßstempel tiefer eindringen, bis das Glas das Volumen der Vorform ausfüllt. Durch Bestimmung der Eindringtiefe des Preßstempels läßt sich über einen Meßwertgeber somit das Volumen und damit unter Berücksichtigung des spezifischen Gewichtes vom Glas das Gesamtgewicht ermitteln.

Die Erfindung erstreckt sich weiterhin auf eine Vorrichtung in

- 5 -

der eingangs genannten Art, welche die Eindringtiefe des Preßstempels in den in der Vorform befindlichen flüssigen Glastropfen durch Erfassung des von seinem Betätigungskolben oder dessen Kolbenstange in seinem bzw. ihrem Endbereich zurückgelegten Weges mittels eines Meßwertgebers erfolgt. Dies kann in der Weise geschehen, daß z.B. mehrere im Bewegungsbereich angeordnete, elektrische Kontakte nacheinander abgetastet werden, so daß der vom Preßstempel zurückgelegte Weg genau erfaßt werden kann.

**Dipl.-Ing. A. Spalthoff**
Patentanwalt

D-43 Essen 1, den    14. 4. 1980
Pelmanstraße 31
Postschließfach 34 02 20
Telefon (0201) 77 20 08

0021066

Akten-Nr.  23 631 G.
in der Antwort bitte angeben

VEBA-GLAS AG

4300 Essen 12


P A T E N T A N S P R Ü C H E   :

1.  Verfahren zur Ermittlung des Gewichtes von Hohlglasartikeln während deren Herstellung im Preßblasverfahren
mittels IS-Maschinen, dadurch gekennzeichnet, daß nach Einbringen des flüssigen Glastropfens in die Vorform einer
IS-Maschine die Messung seines Volumens erfolgt.


2.  Verfahren nach Anspruch 1, dadurch gekennzeichnet, daß
die Volumenmessung durch Bestimmung der Eindringtiefe des
Preßstempels in den in der Vorform befindlichen Glastropfen
vorgenommen wird.


3.  Verfahren nach Anspruch 1 und/oder 2, dadurch gekennzeichnet,
daß die Messung der Eindringtiefe des Preßstempels durch Erfassung des vom Preßstempel beim Preßvorgang zurückgelegten Weges
erfolgt.


4.  Verfahren nach Anspruch 1 und/oder einem oder mehreren der

folgenden, <u>dadurch gekennzeichnet</u>, daß der Endbereich des Weges des Betätigungskolbens des Preßstempels oder der Kolbenstange des Betätigungskolbens gemessen wird.

5. Verfahren nach Anspruch 1 und/oder einem oder mehreren der folgenden, <u>dadurch gekennzeichnet</u>, daß der zurückgelegte Weg mittels eines Meßwertgebers erfaßt und sichtbar gemacht wird.

6. Verfahren nach Anspruch 1 und/oder einem oder mehreren der folgenden, <u>dadurch gekennzeichnet</u>, daß die vom Meßwertgeber erfaßten Werte zur Regelung der Größe der den Vorformen zugeführten Glastropfen dienen.

7. Vorrichtung zur Ermittlung des Gewichtes von Hohlglasartikeln während deren Herstellung im Preßblasverfahren mittels IS-Maschinen, insbesondere zur Durchführung des Verfahrens nach Anspruch 1 und/oder einem oder mehreren der Unteransprüche, <u>dadurch gekennzeichnet</u>, daß die Eindringtiefe des Preßstempels in den in der Vorform befindlichen flüssigen Glastropfen durch Erfassung des von seinem Betätigungskolben des dessen Kolbenstange in seinem bzw. ihrem Endbereich zurückgelegten Weges mittels eines Meßwertgebers erfolgt.

Europäisches Patentamt

**EUROPÄISCHER RECHERCHENBERICHT**

0021066

EP 80 10 2917.4

| **EINSCHLÄGIGE DOKUMENTE** | | | **KLASSIFIKATION DER ANMELDUNG (Int.Cl.3)** |
|---|---|---|---|
| Kategorie | Kennzeichnung des Dokuments mit Angabe, soweit erforderlich, der maßgeblichen Teile | betrifft Anspruch | |
| A | US − A − 1 820 508 (J. SYLVESTER)  −− | | C 03 B 7/00 |
| A | US − A − 1 941 552 (K.M. HENRY et al.)  −− | | C 03 B 11/16 |
| A | DE − A − 2 334 431 (EMHART CORP.)  −−−− | | G 01 G 17/04 |
| | | | G 01 F 17/00 |

**RECHERCHIERTE SACHGEBIETE (Int. Cl.3)**

C 03 B 7/00
C 03 B 9/00
C 03 B 11/00
G 01 F 17/00
G 01 G 9/00
G 01 G 17/04
G 01 G 19/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 19-09-1980 | HÖRNER |

EPA form 1503.1   06.78